# EUROPÄISCHE PATENTANMELDUNG

(11) **EP 0 974 632 A1**
(43) Veröffentlichungstag der Anmeldung: **26.01.2000**
(21) Anmeldenummer: 99113309.1
(22) Anmeldetag: 09.07.1999
(51) Int. Cl.: C09J 7/02

(54) **Doppelseitiges Klebeband mit reaktivem, viskoelastischen Träger**

(30) Priorität: 23.07.1998 DE 19833175
(71) Anmelder: Beiersdorf Aktiengesellschaft, 20245 Hamburg (DE)
(72) Erfinder: Zimmermann, Dieter, 21635 York (DE); Kehler, Harald, Dr., 21109 Hamburg (DE)

(57) **Zusammenfassung**

Doppelseitiges Klebeband mit einem reaktiven, feuchtigkeitsvernetzenden viskoelastischen Träger, der beidseitig mit einer druckempfindlichen Selbstklebemasse beschichtet ist.

## Beschreibung

Die Erfindung betrifft ein doppelseitiges Klebeband mit reaktivem, viskoelastischen Träger und seine Herstellung.

Um von einer Fixierung mit druckempfindlichem Kleber (PSA) zu einer konstruktiven Verklebung (> 100 N/cm²) zu gelangen, war bis jetzt der Einsatz von Wärme (Heißhärtung) erforderlich. Dies ist jedoch für die Praxis aufwendig und führt nicht immer zu befriedigenden Ergebnissen, u.a. weil die Klebfuge oftmals nicht ausreichend mit Wärme behandelt werden kann.

Die andererseits bekannten Konstruktionsklebstofffolien auf z.B. Nitrilkautschuk /Phenolharz- oder Polyvinylformal/Epoxid-Basis haben keine Anfangshaftung und müssen mit Wärme oder Lösungsmittel fixiert werden. Auch dies ist für die Praxis schwierig, mit zusätzlichem Aufwand verbunden und ein Verrutschen der Fügeteile kann leicht geschehen.

Schließlich sind die bekannten doppelseitigen Selbstklebefolien ((Fixe) insofern unzulänglich, als damit hergestellte Verklebungen oftmals zu schwach sind und nicht in den Bereich von sog. konstruktiven Verklebungen kommen, also nicht zu Festigkeiten von mehr als 100N/cm².

Somit war es Aufgabe der Erfindung, hier Abhilfe zu schaffen, d.h. eine Problemlösung zur Verfügung zu stellen, die ohne die Hilfsmittel Wärme oder Lösungsmittel eine Bindefestigkeitssteigerung von PSA zur konstruktiven Verklebung schafft.

Gelöst wird diese Aufgabe durch ein doppelseitiges Klebeband, wie dies näher in den Ansprüchen gekennzeichnet ist.

Überraschenderweise wurde gefunden, daß mit einem reaktiven viskoelastischen Träger insb. auf EKF-PU-Basis (einkomponentiges feuchtigkeitsvernetzendes Polyurethan) beidseitig mit PSA beschichtet (bevorzugt wäßrige Acrylat-PSA-Dispersion) und der vorhandenen Feuchtigkeit (z.B. aus der Luft, Holz, Pappe, Kork, Ziegel usw.) eine Verklebung von Füllteilen erreicht wird, die im Bereich konstruktiver Verklebungen liegt und für die Praxis außerordentlich gut geeignet ist, insbesondere durch das einfache Anfangs-Fixieren des Klebeverbundes.

Geeignete Massen für den Träger sind insbesondere gefüllte reaktive PUR-Polymere, wie sie als Konstruktionsklebstoffe im Handel sind, z.B. Sikaflex® 252 (Sika AG).

Geeignete Selbstklebemassen sind z.B.: wäßrige Acrylat-Copolymere oder andere PSA-Dispersionen.

Besonders geeignet ist eine definierte Co-Extrusion von EKF-PU (nicht ausgehärtet!) und wäßriger PSA-Paste aus einer Dreigang-Düse zu einem reaktiven Fix. Als Trägermaterial eignet sich insbesondere Sikaflex 252 o. 360 (Fa. Sika). Die wäßrige PSA-Dispersion kann insbesondere Neotac 5486 (Fa. Zeneca) sein (mit Latecoll D (1%) und 25 % igem Ammoniak von der BASF verdickt).

Geeignete Verdickungsmittel sind insbesondere Acrylate, wie obiges Latecoll, das mit wäßrigen Alkalien (z.B. Ammoniak, 25%ig) verdickt wird.

Die Herstellung erfolgt insbesondere, indem ein viskoelastischer Träger (untervernetzt) hergestellt und mit wäßriger PSA-Dispersion beschichtet (auf getrocknetem Trennpapier) und getrocknet wird. Der dann wasserfreie PSA-Dispersionsfilm schützt den reaktiven Träger vor Feuchtigkeit. Mit der Feuchtigkeit der Verklebungspartner oder Luftfeuchte kommt es bei der späteren Verklebung dann zu den bekannten Wechselwirkungen in der Klebfuge (z.B. mit COOH; -CN; - OH-Gruppen usw.), zur Vernetzung der PSA-Dispersion, und somit entsteht ein konstruktiver Verbund.

Die gefertigte Rollen- oder Stanzware wird vorteilhaft in feuchtigkeitsundurchlässigen Material (z.B. 3-fach-Folie aus PE/AL u. Polyester) eingeschweißt werden.

Damit können dann Materialien, die Feuchtigkeit enthalten, z.B. Holz, Pergola usw., Pappe (z.B. 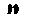 Fibrit"-Preßpappe im Automobilbau), Gipskarton, Mauerwerk usw. oder Materialien, die feuchtigkeitsdurchlässig sind, z.B. Vlies, Filz, offenporiger Schaum usw., wetterfest, wärme- und lösungsmittelfest (d.h. innen und außen) mit den Vorteilen eines viskoelastischen Trägers verklebt werden.

H₂O-freie Verklebungspartner können evtl. durch Besprühen (Verdüsen) von H₂O dementsprechend aktiviert werden.

### Beispiel

Herstellung durch Co-Extrusion mit Dreischichtdüse:

Die Hauptextruder wird mit Hilfe einer Faßpumpe mit Sikaflex 360 HC bei 60°C gespeist.

Aus dem Nebenextruder wird bei 40°C die mit 1% Latecoll D (BASF) und Ammoniak (25%ig) verdickte Neotac 5486-Dispersion (Fa. Zeneca) in den 3-fach-Düsenkopf gefördert.

Aus dem Düsenkopf trifft ein 1 mm dicker Träger, beidseitig mit 30g/m² Neotac 5486 (fest), auf getrocknetem Trennpapier aus.

Nach Durchgang durch einen Trockenkanal mit 60°/80°/100° C-Zonen ist ein hochwertiges reaktives PSA-Klebeband entstanden.

## Patentansprüche

1. Doppelseitiges Klebeband mit einem reaktiven, feuchtigkeitsvernetzenden viskoelastischen Träger, der beidseitig mit einer druckempfindlichen Selbstklebemasse beschichtet ist.

2. Klebeband nach Anspruch 1, dadurch gekennzeichnet, daß der Träger aus einem einkomponentigen feuchtigkeitsvernetzenden Polyurethan (EKF-PK) besteht.

3. Klebeband nach Anspruch 1, dadurch gekennzeichnet, daß die Selbstklebemasse eine Acrylat-Masse, insbesondere eine auf Basis einer wässrigen Acrylat-Dispersion ist, die gegebenenfalls einen Verdicker enthält.

4. Klebeband nach Anspruch 1, dadurch gekennzeichnet, daß Träger und Selbstklebemasse coextrudiert sind.

5. Klebeband nach Anspruch 1, dadurch gekennzeichnet, daß der Träger von 0,4 bis 2,0 mm, insbesondere von 0,8 bis 1,4 mm dick ist und die beidseits auf diesen aufgebrachte Selbstklebemasse von 10 bis 50 µm, insbesondere von 20 bis 30 µm dick ist.

6. Klebeband nach Anspruch 1, dadurch gekennzeichnet, daß es beidseitig oder insbesondere einseitig mit Trennpapier oder Trennfolie abgedeckt ist.

7. Klebeband nach Anspruch 1, dadurch gekennzeichnet, daß es in einem feuchtigkeitsundurchlässigen Material verpackt ist.

8. Verfahren zur Herstellung eines Klebebandes nach einem der Ansprüche 1 bis 7, dadurch gekennzeichnet, daß durch eine Dreischichtdüse über einem Hauptextruder die Masse für den Träger in den mittleren Düsenspalt gefördert wird und über einen Nebenextruder die Selbstklebemasse in den oberen und den unteren Düsenkopf der Träger beidseits mit Selbstklebemasse beschichtet austritt, worauf das Material gegebenenfalls getrocknet, mit Trennpapier oder Trennfolie eingedeckt, geschnitten und verpackt wird.

9. Verfahren nach Anspruch 8, dadurch gekennzeichnet, daß der Hauptextruder 40°-80°C, insbesondere 50°-70°C heiß ist und der Nebenextruder 30°-60°, insbesondere 35°-50° heiß ist.
